# EUROPÄISCHE PATENTSCHRIFT

(11) **EP 1 186 226 B1**
(45) Veröffentlichungstag und Bekanntmachung des Hinweises auf die Patenterteilung: **18.02.2004**
(21) Anmeldenummer: 01121853.4
(22) Anmeldetag: 11.09.2001
(51) Int. Cl.: A01F 25/20, A01K 5/00

(54) **Silokamm zur Entnahme und Verteilung von Silage**
Silage cutter for unloading and distributing silage
Outil à couper ensilage pour la décharge et la distribution du même

(30) Priorität: 12.09.2000 DE 20015745 U
(43) Veröffentlichungstag der Anmeldung: 13.03.2002
(73) Patentinhaber: Reiter, Josef, 83373 Taching am See (DE)
(72) Erfinder: Reiter, Josef, 83373 Taching am See (DE)
(74) Vertreter: Winter, Brandl, Fürniss, Hübner, Röss, Kaiser, Polte Partnerschaft

(56) Entgegenhaltungen:
- DE-A- 2 652 310
- DE-U- 9 001 185
- FR-A- 2 400 472
- FR-A- 2 553 619
- US-A- 4 428 537

## Beschreibung

Die Erfindung betrifft einen Silokamm zur Entnahme und Verteilung von Silage, nach dem Oberbegriff des Anspruches 1.

Derartige Silokämme oder Siloentnahmegeräte werden seit mehreren Jahren, zum Beispiel durch die MASCHINENFABRIK BERNARD VAN LENGERICH GMBH & CO., Emsbüren, AUDUREAU MANU-TENSIONS, La Copechagnière, Frankreich oder JEANTIL S.A., Mordelles, Frankreich vertrieben.

Ein weiterer Silokamm, von dem die vorliegende Erfindung ausgeht, ist in dem DE-GM 90 01 185 beschrieben. Was den generellen Aufbau von Silokämmen betrifft, wird hier insofern auf dieses deutsche Gebrauchsmuster vollinhaltlich Bezug genommen.

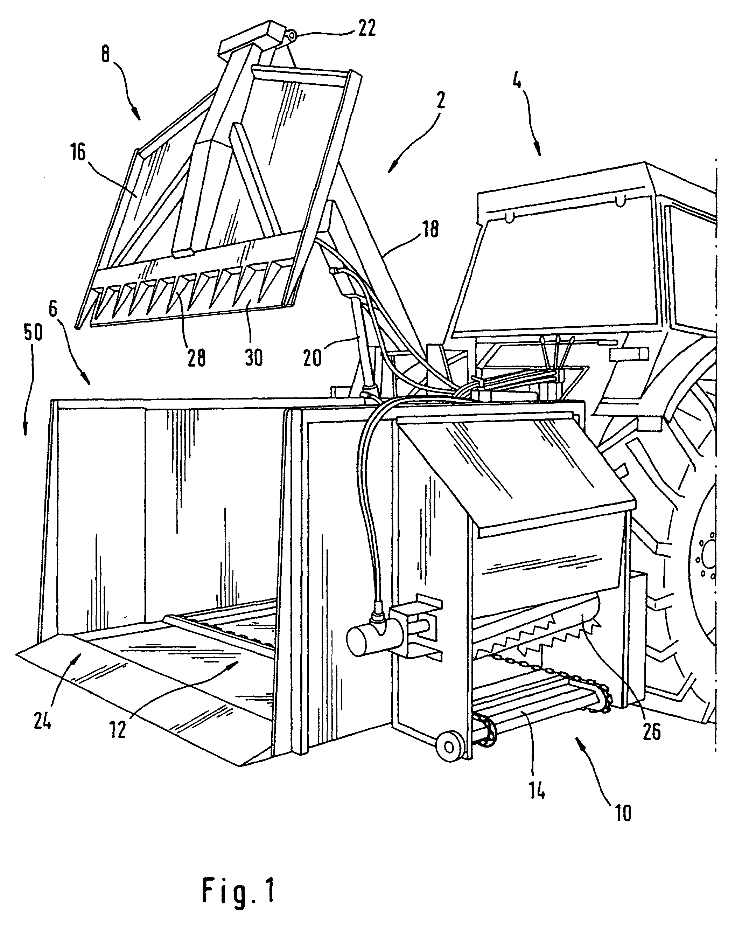

Fig. 1 der beigefügten Zeichnung zeigt einen Silokamm mit bekanntem Aufbau. In Fig. 1 ist dargestellt, wie ein Silokamm 2 am Heck eines landwirtschaftlichen Nutzfahrzeugs, beispielsweise eines Traktors 4, an dessen Heckgerät angebracht ist. Der Silokamm 2 umfaßt im wesentlichen einen kastenförmigen, nach oben offenen Transportbehälter 6, eine Ladeeinrichtung 8 und eine Dosiereinrichtung 10. Ein Boden 12 des Transportbehälters ist zumindest teilweise in Form eines Kratzbodens ausgebildet, das heißt, ein Teil der Fläche des Bodens 12 wird durch einen Kratzboden 14 überdeckt. Der Transportbehälter 6 wird mit der Ladeeinrichtung 8, welche kraftangetrieben, insbesondere hydraulisch betrieben ist, beladen.

Hierzu weist die Ladeeinrichtung 8 ein Entnahmeschild 16 auf, welches an einem Betätigungsarm 18 schwenkbar gelagert ist. Der Betätigungsarm 18 ist mit seinem dem Entnahmeschild 16 abgewandten Ende am oberen Randbereich des Transportbehälters 6 schwenkbeweglich gelagert. Der Antrieb des Betätigungsarms 18 gegenüber dem Transportbehälter 6 erfolgt über einen ersten Hydraulikzylinder 20, der sich mit einem Ende an dem Transportbehälter 6 und mit seinem anderen Ende an dem Betätigungsarm 18 abstützt. Die Bewegung des Entnahmeschildes 16, welches am freien Ende des Betätigungsarms 18 in einem dortigen Lager 22 schwenkbeweglich gelagert ist, erfolgt ebenfalls über einen in Fig. 1 nicht sichtbaren Hydraulikzylinder, der sich mit einem Ende an dem Betätigungsarm 18 und mit seinem anderen Ende an dem Entnahmeschild 16 abstützt. Durch entsprechende Ansteuerung der Hydraulikzylinder lassen sich der Betätigungsarm 18 und das Entnahmeschild 16 auf- und abbewegen, sowie von einer Beladeöffnung 24 des Transportbehälters 6 weg- bzw. auf diese zubewegen, so daß der Transportbehälter 6 durch das Entnahmeschild 16 nach Art einer Baggerschaufel mit Silage befüllt werden kann. Während des Transports der Silage zwischen Silo und Futterstelle wird das Entnahmeschild 16 abgesenkt und dient zum Verschluß der Beladeöffnung 24.

An der Futterstelle wird dann die sich im Transportbehälter 6 befindliche Silage durch den Kratzboden 14 in Richtung der Dosiereinrichtung 10 gefördert, welche sich an einer der beiden Seitenwände des Transportbehälters 6 befindet, und dort von ebenfalls hydraulisch angetriebenen Dosierwalzen 26 ausgebracht.

An der Unterkante des Entnahmeschildes 16 befindet sich eine Reihe von rechen- oder kammartigen Zähnen 28, mit welchen die Silage (z.B. Grassilage oder Maissilage) vom eigentlichen Silo nach und nach abgestochen und durch entsprechende Bewegungen des Betätigungsarms 18 und des Entnahmeschildes 16 über die Hydraulikzylinder nach und nach in den Transportbehälter 6 gefördert wird.

Zusätzlich vorgesehen ist noch eine sogenannte Restgutklappe 30, welche ebenfalls hydraulisch betätigbar sein kann und mit der der von den Zähnen 28 gebildete Freiraum verschließbar ist, um auf dem Boden liegendes Silage-Restgut in den Transportbehälter 6 fördern zu können, welches ansonsten aufgrund der Zwischenräume zwischen den Zähnen 28 nicht erfaßbar wäre.

Bis hierher entsprechen Aufbau und Funktionsweise des in Fig. 1 dargestellten Silokamms 2 Aufbau und Funktionsweise eines Silokamms, wie er beispielsweise in dem eingangs genannten DE-GM 90 01 185 beschrieben ist.

Es ist bei der modernen Nutzviehhaltung eine übliche Praxis, der über die Dosiereinrichtung 10 ausgegebenen Silage noch Futterzusätze, insbesondere Kraftfutterzusätze, beizugeben. Hierzu ist es beispielsweise bekannt, oberhalb der Dosierwalze oder der Dosierwalzen 26 einen Aufnahmebehälter im Bereich der Dosiereinrichtung 10 anzubringen, der zur Aufnahme des Futterzusatzes dient und der über eine Abgabevorrichtung den Futterzusatz auf die mittels dem Kratzboden 14 und den Dosierwalzen 26 abgegebene Silage streut. Im Zuge der kontinuierlichen Abgabe der Silage aus der Dosiereinrichtung 10 wird somit ebenso kontinuierlich der Futterzusatz mit abgegeben.

Auch die FR-A-2 553 619 zeigt eine derartige Dosiereinrichtung, bei der ein (Kraft)Futterzusatz der Silage im Abgabebereich zudosiert wird.

Diese bekannten Vorrichtungen bewirken allerdings, daß der Futterzusatz größtenteils auf der ausgebrachten Silage zu liegen kommt, wenn der Traktor 4 mit laufender Dosiereinrichtung 10 an einem Freßgitter entlangfährt und seitlich kontinuierlich einen Silagestrang vor dem Freßgitter ablegt, so daß er von den Tieren erreichbar ist. Aufgrund der Tatsache, daß der Futterzusatz, beispielsweise Getreidemehl oder Getreideschrot, den Tieren besser schmeckt als die Silage, neigen die Tiere dazu, das ausgebrachte Futter zu selektieren, das heißt, das größtenteils lose auf der Silage liegende Kraftfutter oder der Futterzusatz allgemein wird von den Tieren bevorzugt aufgenommen, beispielsweise abgeleckt.

Dies ist jedoch aus Gründen einer dann nicht mehr optimal gewährleisteten Versorgung der Tiere unerwünscht.

Aufgabe der vorliegenden Erfindung ist es somit, einen Silokamm nach dem Oberbegriff des Anspruches 1 so auszugestalten, daß das mit ihm ausgebrachte Silofutter, welchem ein Futterzusatz oder Futterzusätze beigegeben werden soll, von den Tieren nicht mehr ohne weiteres selektiert werden kann. Konkret bedeutet dies, Silage und Futterzusatz derart zu mischen, daß die Tiere keine Möglichkeit haben, den von ihnen bevorzugten Futterzusatz aus der ausgebrachten Silagefütterung herauszuselektieren.

Zwar ist es zur Erzielung dieser Wirkung bekannt, Silofutter und Futterzusätze in sogenannten Mischwägen unter Zuhilfenahme von Schnecken-Mischwalzen innig zu vermischen. Derartige Futtermischwägen werden z.B. von der Firma OF-FICINE SAGRIBOLDI, Mailand, Italien vertrieben. Futtermischwägen sind jedoch in ihrer Anschaffung sehr teuer und haben komplizierten und damit verschleißanfälligen Aufbau.

Die Erfindung löst demgegenüber die hier zugrundeliegende Aufgabe dadurch, daß sie einen Silokamm zur Entnahme und Verteilung von Silage schafft, mit: einem Transportbehälter; einer Ladeeinrichtung mit einem schwenkbaren und kraftangetriebenen Entnahmeschild, mit welchem Silage in einem Entnahmebereich aus dem Silo entnehmbar und in den Transportbehälter (6) einladbar ist; und einer Vorrichtung zum Abgeben und Verteilen der Silage aus dem Transportbehälter, wobei dieser Silokamm gekennzeichnet ist durch eine Zugabevorrichtung für wenigstens einen Futterzusatz, insbesondere Kraftfutter, im Entnahmebereich, wobei die Zugabevorrichtung an dem Entnahmeschild angeordnet ist.

Im Gegensatz zu bisherigen Silokämmen, bei denen der Futterzusatz im Bereich der Dosiereinrichtung zugesetzt wird, welche die Silage aus dem Transportbehälter herausfördert, erfolgt beim Gegenstand der vorliegenden Erfindung die Zugabe des Futterzusatzes im Entnahmebereich des Silokamms, d.h. in dem Bereich, wo mittels des Entnahmeschildes die Silage nach und nach vom Silo abgestochen oder -gestrichen (entnommen) und in den Transportbehälter gefördert wird. Dieser Vorgang erfolgt durch Einstechbewegungen des Entnahmeschildes bis zu einer bestimmten Tiefe in das Silo, gefolgt von einer harkenartigen Zieh- oder Streichbewegung, mit der die von dem Silo abgestochene Silage-Teilmenge in den Transportbehälter gezogen wird.

Ist also die Zugabevorrichtung für den Futterzusatz an dem Entnahmeschild angeordnet, wird gewährleistet, daß die Zugabevorrichtung sich stets im Entnahmebereich, d.h. im Bewegungsbereich des Entnahmeschildes befindet und der Futterzusatz zuverlässig im Entnahmebereich der dem Silo gerade entnommenen Silage-Teilmenge bereits während der Entnahme zugesetzt wird.

Erfolgt daher die Zugabe des Futterzusatzes im Bereich dieser Ziehbewegung des Entnahmeschildes, d.h. während der Silageentnahme vom Silo im Entnahmebereich, ergibt sich eine selbsttätige Untermischung des Futterzusatzes unter die Silage, welche sukzessive den Transportbehälter füllt. Durch den Feuchtigkeitsgehalt der Silage und durch die längere Verweildauer des Futterzusatzes in der sich im Transportbehälter befindlichen Silage, bis diese vom Silo zum Futterort transportiert und dort ausgebracht worden ist, hat der Futterzusatz ausreichend Zeit, sich an die Silage anzubinden. Eine nochmalige Durchmischung und Homogenisierung erfolgt dann weiterhin im Zuge der Ausbringung der Silage über die Dosiereinrichtung. Die für das Nutzvieh ausgebrachte Futtermischung aus Silage und Futterzusatz kann während des Freßvorganges vom Vieh nicht mehr selektiert werden, da eine An- und Einbindung des Futterzusatzes an oder in die Silage erfolgt ist. Es wird somit sichergestellt, daß das Vieh neben dem Futterzusatz auch das Grundfutter in Form der Silage zu sich nimmt.

Vorteilhafte Weiterbildungen der Erfindung sind Gegenstand der Unteransprüche.

Die Zugabevorrichtung kann gemäß einer Ausgestaltungsform an der dem Transportbehälter-Innenraum zugewandten Seite des Entnahmeschildes angeordnet sein. Genausogut kann die Zugabevorrichtung auch an der dem Transportbehälter-Innenraum abgewandten Seite des Entnahmeschildes angeordnet sein. In beiden Fällen ist sichergestellt, daß der Futterzusatz im Zuge der Entnahme- und Ladebewegung des Entnahmeschildes (und bevorzugt auch einer entsprechend gerichteten Rückbewegung) auf die momentan vom Entnahmeschild gehandhabte Silage-Teilmenge aufgebracht und im Zuge der Beladung des Transportbehälters mit dieser vermischt wird.

Bevorzugt gibt die Zugabevorrichtung den Futterzusatz in dosierbaren Mengen der Silage zu, so daß den jeweiligen Bedürfnissen und Anforderungen hinsichtlich einer optimalen Futterzusatzversorgung Rechnung getragen werden kann. Weiterhin bevorzugt ist mindestens ein Vorratsbehälter für den Futterzusatz vorgesehen, welcher in Fluidverbindung mit der Zugabevorrichtung ist, um einen kontinuierlichen Futterzusatz-Nachschub sicherzustellen.

Die Zugabevorrichtung kann den Futterzusatz auf mehrere Arten fördern bzw. der soeben gehandhabten Silage-Teilmenge zugeben. Beispielsweise kann die Zugabevorrichtung den Futterzusatz mechanisch fördern, was beispielsweise durch einen von einem Kolben betätigten Schieber erfolgen kann. Hierbei kann der Kolbenschieber einfachund doppeltwirkend sein. Die sich hieraus ergebenden Vorteile werden insbesondere aus der nachfolgenden bevorzugten Ausführungsform der Erfindung näher ersichtlich.

Der Kolbenschieber kann auf mehrere Arten betätigt sein, besonders bevorzugt jedoch hydraulisch, also über einen Hydaulikzylinder, um auf das bereits seitens des Silokamms vorhandene Hydrauliksystem zurückgreifen zu können.

Anstelle eines kolbenbetätigten Schiebers oder Kolbenschiebers kann die Zugabevorrichtung den Futterzusatz auch durch eine Förderschnecke fördern, wobei die Förderschnecke wiederum bevorzugt durch einen Hydraulikmotor angetrieben ist. Anstelle eines Hydraulikmotors kann genauso gut auch ein Elektromotor zur Anwendung gelangen.

In einer besonders einfachen Ausführungsform kann der Futterzusatz auch unter reinem Schwerkrafteinfluß aus dem Vorratsbehälter fließen oder austreten, wobei der Vorratsbehälter von einem Sperrventil selektiv öffen- oder schließbar ist. Hierbei ist das Sperrventil elektromagnetisch, besonders bevorzugt jedoch wieder hydraulisch betätigbar.

Eine weitere Möglichkeit, den Futterzusatz aus dem Vorratsbehälter zu fördern, ist, eine pneumatische Fördervorrichtung vorzusehen. Dies ist insbesondere dann von Vorteil, wenn der Vorratsbehälter nicht in direkter, schwerkraftunterstützter Fluidverbindung mit der Zugabevorrichtung ist.

Erfolgt die Betätigung der Zugabevorrichtung auf hydraulischem Weg, wird der Hydraulikantrieb der Zugabevorrichtung bevorzugt mit demjenigen für die Vor- und Rückwärtsbewegungen des Entnahmeschildes gekoppelt. Somit ist sichergestellt, daß bei den Vor- und bevorzugt auch Rückwärtsbewegungen des Entnahmeschildes im Zuge der Entnahme der Silage-Teilmenge aus dem Silo die Zugabevorrichtung in Betrieb ist; bei ruhendem Entnahmeschild arbeitet auch die Zugabevorrichtung nicht, so daß ein ungewolltes Ausbringen des Futterzusatzes verhindert ist.

Bevorzugt ist die Zugabefunktion der Zugabevorrichtung mit der Bewegung des Entnahmeschildes derart gekoppelt, daß bei jeder zum Transportbehälter-Innenraum hin und von diesem weg gerichteten Bewegung des Entnahmeschildes die Zugabevorrichtung eine Futterzusatz-Dosis abgibt. Hierdurch wird die zugegebene Futterzusatz-Dosis zusammen mit der soeben vom Entnahmeschild entnommenen Silage-Teilmenge in den Transportbehälter gefördert, wobei durch die weiter oben bereits erläuterte harkenförmige Zieh- und Streichbewegung des Entnahmeschildes der Futterzusatz eine innige Verbindung oder Anhaftung mit der Silage eingeht.

Bevorzugt gibt die Zugabevorrichtung den Futterzusatz über die Breite der Transportbehälter-Beladeöffnung verteilt ab, so daß eine gleichmäßige Durchsetzung der Silage mit dem Futterzusatz gewährleistet ist.

Weitere Einzelheiten, Aspekte und Vorteile der vorliegenden Erfindung ergeben sich aus der nachfolgenden Beschreibung eines als illustrativ und nicht einschränkend zu verstehenden Ausführungsbeispiels anhand der Zeichnung.

Es zeigt:
Fig. 1 eine perspektivische Ansicht eines Silokammes von schräg hinten;
Fig. 2 die wesentlichsten mechanischen Antriebskomponenten des Entnahmeschildes in perspektivischer und auseinandergezogener Darstellung;
Fig. 3 eine Möglichkeit des Anbaus einer erfindungsgemäßen Zugabevorrichtung an einem Entnahmeschild; und
Fig. 4 eine geschnittene und schematisch vereinfachte Teilansicht durch eine erfindungsgemäße Zugabevorrichtung.

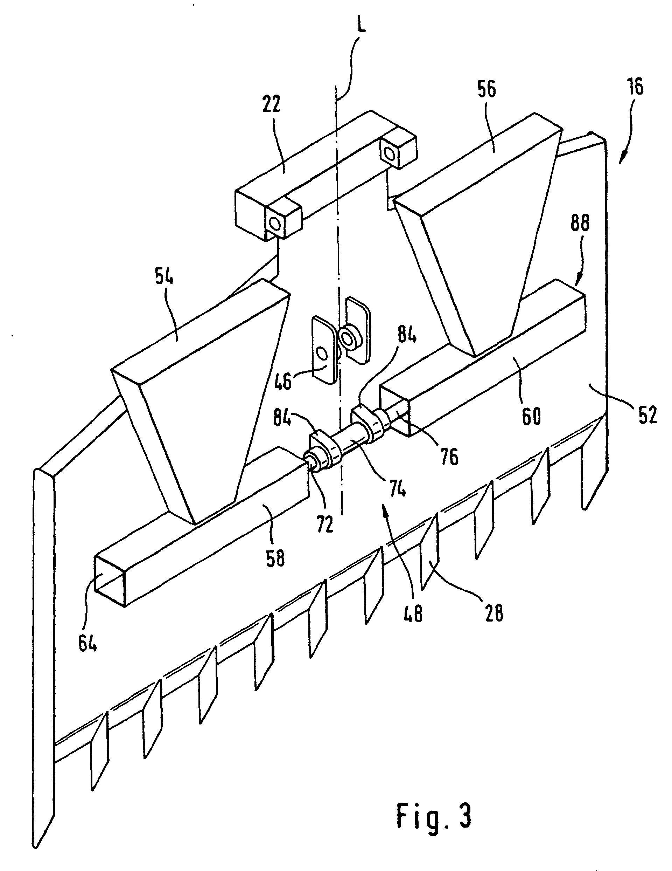

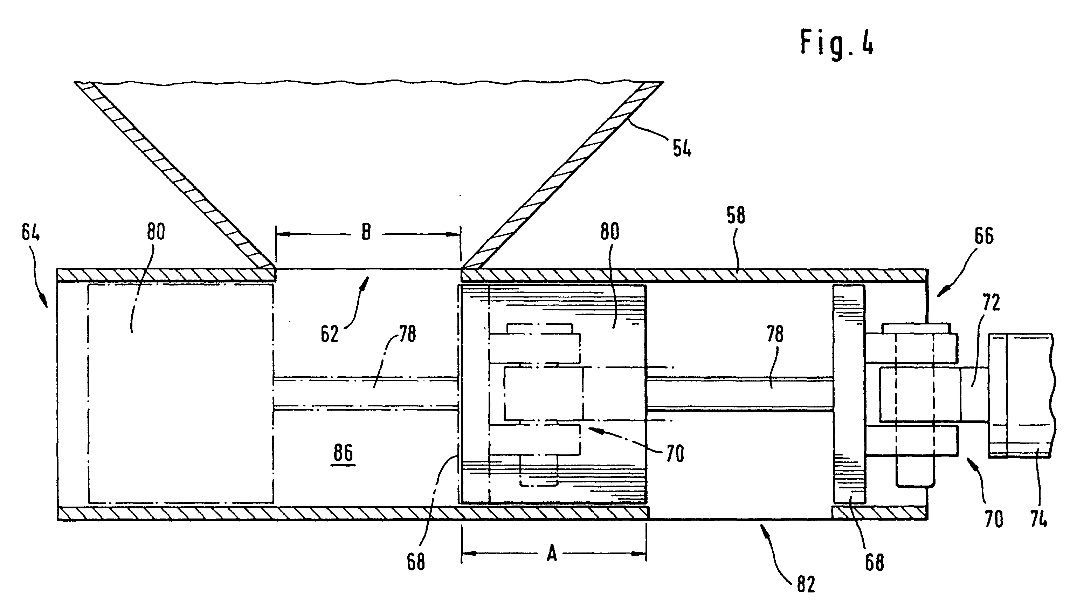

Die erfindungsgemäße Zugabevorrichtung, wie sie insbesondere aus den nachfolgenden Figuren 3 und 4 hervorgeht, kann bei einem Silokamm zur Anwendung gelangen, wie er bereits eingangs unter Bezugnahme auf Fig. 1 beschrieben worden ist.

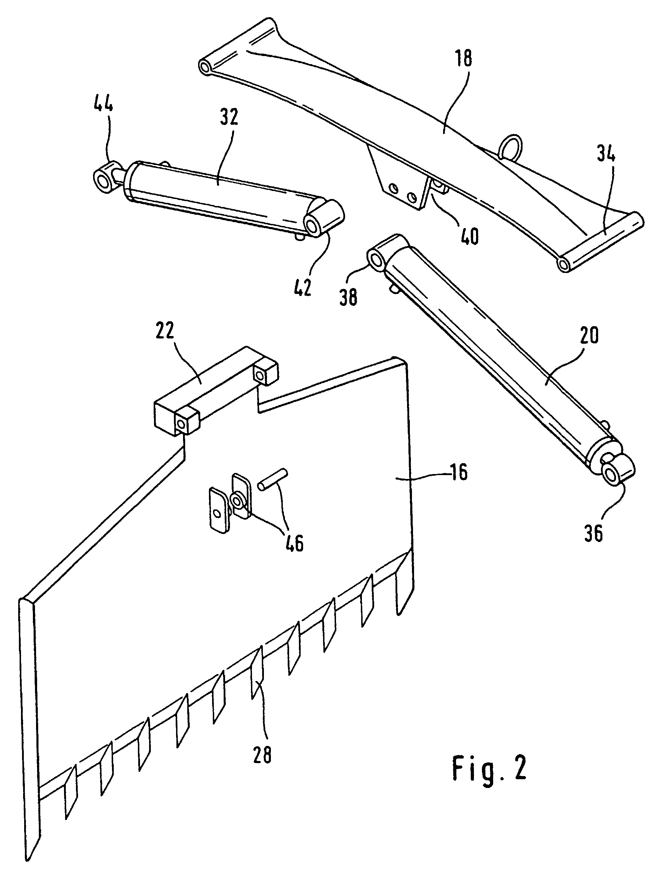

Fig. 2 zeigt nochmals die wesentlichsten mechanischen Antriebskomponenten für das Entnahmeschild 16, nämlich den Betätigungsarm 18, den in Fig. 1 bereits sichtbaren Hydraulikzylinder 20, einen weiteren in Fig. 1 nicht sichtbaren Hydraulikzylinder 32 und das Lager 22. Der Betätigungsarm 18 ist mit einem Lager 34 seitens des Transportbehälters 6 schwenkbeweglich gelagert und trägt an seinem dem Lager 34 abgewandten Ende im Lager 22 das Entnahmeschild 16. Der Hydraulikzylinder 20 stützt sich mit einem Lager 36 ebenfalls seitens des Transportbehälters 6 ab und mit einem weiteren Lager 38 an einem Flansch 40 des Betätigungsarms und dient somit für eine schwenkbewegliche Auf- und Abbewegung des Betätigungsarms 18. Der Hydraulikzylinder 32 stützt sich mit einem Lager 42 am Flansch 40 und mit einem weiteren Lager 44 an dem Entnahmeschild 16 im Bereich eines dortigen Gegenlagers 46 ab. Mit dem Hydraulikzylinder 32 kann somit das Entnahmeschild 16 baggerartige Greif- und Schwenkbewegungen um das Lager 22 ausführen.

Fig. 3 zeigt eine gegenüber Fig. 2 vergrößerte Darstellung des Entnahmeschildes 16 mit einer hieran angebrachten Zugabevorrichtung 48, mittels der ein Futterzusatz in einem Entnahmebereich 50 der dort vom Entnahmeschild 16 gehandhabten Silage-Teilmenge zugesetzt werden kann. Der Entnahmebereich 50 befindet sich gemäß Fig. 1 außer- oder vorderhalb der Beladeöffnung 24 und umfaßt im wesentlichen den Hub- und Schwenkbereich des Entnahmeschildes 16, der durch entsprechende Bewegungen des Betätigungsarms 18 und/oder des Entnahmeschildes 16 abgedeckt werden kann.

Die Zugabevorrichtung 48 ist im in Fig. 3 dargestellten Ausführungsbeispiel an einer Innenseite 52 des Entnahmeschildes 16, d.h. derjenigen Seite des Entnahmeschildes 16 angeordnet, welche in Richtung des Transportbehälter-Innenraums weist. Die Zugabevorrichtung 48 umfaßt im in Fig. 3 dargestellten Ausführungsbeispiel im wesentlichen zwei Vorratsbehälter 54 und 56, welche zur Aufnahme des Futterzusatzes dienen. Die Vorratsbehälter 54 und 56 können an ihrer Oberseite offen, bevorzugt jedoch mit verschließbaren Deckeln oder Klappen versehen sein. Im dargestellten Ausführungsbeispiel haben die Vorratsbehälter 54 und 56 eine sich nach unten verjüngende Trichterform und sitzen mit ihrer freien Unterseite oder Öffnung jeweils auf einem Zugabegehäuse 58 bzw. 60 auf. Die Verbindung zwischen dem Vorratsbehälter 54 und dem Zugabegehäuse 58 ist in Fig. 4 im Schnitt dargestellt und erfolgt über eine an der Oberseite des Zugabehäuses 58 ausgebildete Öffnung 62. Analog hierzu steht die untere Öffnung des Vorratsbehälters 56 mit dem Inneren des Zugabegehäuses 60 über eine weitere Öffnung in Verbindung.

Es sei an dieser Stelle festgehalten, daß der Aufbau des Zugabegehäuses 60 in seinem Inneren spiegelsymmetrisch zu demjenigen des Zugabegehäuses 58 gemäß Fig. 4 ist, wobei die Symmetrieebene oder -linie in Fig. 3 mit L bezeichnet ist und gleichzeitig die Symmetrielinie für das Entnahmeschild 16 und die Lager 22 und 46 darstellt. Die unter Bezugnahme auf Fig. 4 gemachten Erläuterungen betreffend das Zugabegehäuse 58 treffen somit gleichermaßen auf das Zugabegehäuse 60 zu.

Im dargestellten Ausführungsbeispiel ist das Zugabegehäuse 58 von viereckigem, beispielsweise quadratischem Querschnitt mit seitlich offenen Enden 64 und 66. Vom Ende 66 des Zugabegehäuses 58 her ist in das Innere des Zugabegehäuses 58 ein kolbenbetätigter Schieber 68 eingeführt. Der Schieber 68 ist über einen Verbindungsanschluß 70 mit einer Kolbenstange 72 eines Zylinders 74 verbunden. Der Zylinder 74 bzw. der von dem Zylinder 74 betätigte Kolben und damit die in das Zugabegehäuse 58 ragende Kolbenstange 72 und eine weitere, in das Zugabegehäuse 60 ragende Kolbenstange 76 sind somit in der Lage, über einen bestimmten Hub eine Hin- und Herbewegung durchzuführen.

Doppeltwirkende Zylinder nach Art des Zylinders 74 sind unter der Bezeichnung "Gleichlaufzylinder" bekannt und gestatten in vorteilhafter Weise die platzsparende Anordnung der beiden Zugabegehäuse 58 und 60 in einer gemeinsamen horizontalen Ebene.

In Fig. 4 ist mit strichpunktierten Linien die maximal nach links ausgefahrene Stellung des Kolbens und damit der Kolbenstange 72 dargestellt und in durchgezogenen Linien die maximal nach rechts eingefahrene Stellung der Kolbenstange 72, welche dann einer maximal nach rechts ausgefahrenen Stellung der weiteren Kolbenstange 76 seitens des Zugabegehäuses 60 entspricht.

Der Schieber 68 ist im Inneren des Zugabehäuses 58 im wesentlichen dicht, jedoch gleitbeweglich geführt. An seiner dem Anschluß 70 gegenüberliegenden Seite trägt der Schieber 68 eine Schubstange 78, welche wiederum mit einem Verschlußschieber 80 in Verbindung steht. Der Verschlußschieber 80 ist wie der Schieber 68 gleitbeweglich im Inneren des Zugabegehäuses 58 geführt. Eine Längserstreckung A des Verschlußschiebers 80 entspricht zumindest einer Länge B der Öffnung 62. An derjenigen Seite oder Fläche des Zugabegehäuses 58, welche der Öffnung 62 gegenüberliegt, d.h. im in Fig. 3 dargestellten Ausführungsbeispiel unten, ist gemäß Fig. 4 im Zugabegehäuse 58 eine weitere Öffnung 82 ausgebildet, welche somit nach unten in Richtung Unterkante des Entnahmeschildes 16 weist.

Der Zylinder 74 ist mittels geeigneten Befestigungsflanschen 84 an der Innenseite 52 des Entnahmeschildes 16 befestigt.

Nachfolgend wird - insbesondere unter Bezugnahme auf Fig. 4 - die Arbeitsweise der so aufgebauten Zugabevorrichtung 48 näher erläutert. Die Kolbenstange 72 und damit der Schieber 68 und der Verschlußschieber 80 mögen sich zunächst in der in Fig. 4 mit strichpunktierten Linien dargestellten, maximal nach links verschobenen Endlage befinden. In dieser Lage hat der Verschlußschieber 80 die Öffnung 62 freigegeben, so daß aus dem Vorratsbehälter 54 über die Öffnung 62 der Futterzusatz in einen zwischen dem Schieber 68 und dem Verschlußschieber 80, sowie den drei verbleibenden Umfangswänden des Zugabegehäuses 58 definierten Raum 86 eintreten kann. Im Zuge einer in Fig. 4 nach rechts gerichteten Bewegung des Schiebers 68 und des Verschlußschiebers 80 aufgrund einer Einfahrbewegung der Kolbenstange 72 (gepaart mit einer entsprechenden Ausfahrbewegung der Kolbenstange 76 seitens des Zugabegehäuses 60) wird die Öffnung 62 nach und nach von dem Verschlußschieber 80 verschlossen und die sich in dem Raum 86 befindliche Futterzusatz-Teilmenge oder -Dosis wird von der in Figur rechts liegenden Wand oder Fläche des Verschlußschiebers 80 nach rechts verschoben, bis sie bei Erreichen der in Fig. 4 maximal rechts liegenden zweiten Endlage, welche in Figur 4 mit durchgezogenen Linien dargestellt ist, von dem Verschlußschieber 80 durch die Öffnung 82 vollständig nach unten ausgeworfen worden ist.

Gleichzeitig hat in dieser in Fig. 4 maximal rechts liegenden Endlage der Verschlußschieber 80 die Öffnung 62 wieder zumindest teilweise, bevorzugt vollständig freigegeben, so daß eine weitere Futterzusatz-Dosis in den Raum vor dem Verschlußschieber 80 nachfließen oder nachrutschen kann. Eine nun in Fig. 4 wieder nach links gerichtete Bewegung des Schiebers 68 und damit des Verschlußschiebers 80 verschließt zunächst wieder die Öffnung 62, fördert jedoch die soeben nachgerutschte Futterzusatz-Dosis nach links, bis sie von dem Verschlußschieber 80 am freien oder offenen Ende 64 des Zugabegehäuses 58 ausgestoßen wird und ebenfalls nach unten fällt. Sodann ist die Ausgangslage gemäß obiger Beschreibung wieder erreicht, das heißt, der Verschlußschieber 80 hat die Öffnung 62 wieder freigegeben und der Raum 86 zwischen Schieber 68 und Verschlußschieber 80 wird wieder gefüllt, bis sich der Verschlußschieber 80 wieder nach rechts bewegt usw.

Die Abläufe in dem Zugabegehäuse 60 sind analog zu denjenigen im Zugabehäuse 58, jedoch quasi phasenversetzt, das heißt, wenn sich der Verschlußschieber 80 im Zugabegehäuse 58 gemäß Fig. 4 in der maximal rechts liegenden Stellung befindet und den Futterzusatz über die Öffnung 82 ausstößt, befindet sich ein weiterer Verschlußschieber im Zugabegehäuse 60 zwar ebenfalls in der maximal rechts liegenden Position oder Stellung, hat jedoch hierbei soeben die dort zwischen dem Vorratsbehälter 56 und dem Zugabegehäuse 60 befindliche Öffnung freigegeben, um zwischen einem dortigen Schieber und dem Verschlußschieber einen dem Raum 86 entsprechenden Raum freizugeben. Dies bedeutet, daß bei einer Hin- und Herbewegung des Kolbens im Zylinder 74 der Futterzusatz aus dem Zugabehäuse 58 über die Öffnung 82 und aus dem Zugabegehäuse 60 über ein dortiges offenes Ende 88 (Fig. 3) ausgegeben wird bzw. seitens des Zugabegehäuses 58 über das dortige offene Ende 64 und seitens des Zugabegehäuses 60 über eine der Öffnung 82 entsprechende untere Öffnung.

Durch diese wechselseitige Abgabe des Futterzusatzes aus der Zugabevorrichtung 48 wird der Futterzusatz im in Fig. 4 gezeigten Beispiel an insgesamt vier Abgabestellen im wesentlichen über die gesamte Breite des Entnahmeschildes 16 und damit der Beladeöffnung 24 verteilt abgegeben, und der jeweils gerade gehandhabten Silage-Teilmenge zugeführt.

Der Zylinder 74 zum Antrieb der beiden Zugabehäuse 58 und 60 ist bevorzugt hydraulisch angetrieben. Besonders bevorzugt ist der Antrieb des Zylinders 74 mit demjenigen des Hydraulikzylinders 32, der für die Schwenkbewegungen des Entnahmeschildes 16 zuständig ist, gekoppelt. Dies bedeutet, daß mit jeder Vor- oder Zurückschwenkbewegung, insbesondere und besonders bevorzugt aber mit jeder Vorund Zurückschwenkbewegung des Entnahmeschildes 16 eine entsprechende nach links oder nach rechts erfolgende Bewegung des Kolbens im Zylinder 74 gepaart ist, so daß der Futterzusatz wechselseitig von den Zugabegehäusen 58 und 60 abgegeben wird. Mit anderen Worten, nur bei den baggerartigen Bewegungen des Entnahmeschildes 16 zum Entnehmen einer Silage-Teilmenge vom Silo und wieder zurück ist die Zugabevorrichtung 48 angetrieben und gibt den Futterzusatz ab. Bei stillstehendem Entnahmeschild 16 erfolgt auch keine Futterzusatzabgabe, so daß Überdosierungen oder Verluste an Futterzusatz vermieden sind.

Durch Verändern des Abstandes zwischen dem Schieber 68 und dem Verschlußschieber 80, beispielsweise dadurch, daß der Verschlußschieber 80 mehr oder weniger weit auf die mit einem Gewinde versehene Schubstange 78 aufgeschraubt wird, kann die Größe des Raums 86 und damit die Menge der abzugebenden Futterzusatz-Teilmenge eingestellt und den jeweiligen Erfordernissen angepaßt werden. Alternativ oder zusätzlich können Mittel vorgesehen werden, mit denen die Querschnittsgröße der Öffnung 62 veränderbar ist.

Anstelle der Verwendung eines Gleichlaufzylinders etwa gemäß des Zylinders 74 wäre es auch denkbar, für jedes Zugabegehäuse 58 einen eigenen, einfachwirkenden oder doppeltwirkenden Zylinder vorzusehen.

Es können auch bei besonders groß, d.h. breit bauenden Silokämmen auf jeder Seite der Symmetrielinie L zwei oder mehr Zugabegehäuse angeordnet werden, gegebenenfalls mit mit einer entsprechenden Anzahl an Vorratsbehältern oder einem gemeinsamen Vorratsbehälter. In Fig. 4 wäre dann an der linken Seite des Verschlußschiebers 80 eine Verlängerungsstange analog der Kolbenstange 72 angebracht, welche in ein weiteres, in Fig. 4 links vom Zugabegehäuse 58 liegendes Zugabegehäuse ragt und einen weiteren Schieber und Verschlußschieber analog den Schiebern 68 und 80 trägt und betätigt. Die Anzahl der Austragspunkte oder -stellen für den Futterzusatz über die Breite des Schildes 16 hinweg kann hierdurch erhöht werden.

Weiterhin ist der Gegenstand der vorliegenden Erfindung nicht auf die dargestellte Ausführungsform beschränkt, sondern es ist eine Vielzahl von Modifikationen und Abwandlungen denkbar.

So wäre es möglich, die gesamte Zugabevorrichtung 48 auf der der Innenseite 52 gegenüberliegenden Außenseite des Entnahmeschildes 16 anzuordnen. Weiterhin kann anstelle einer Förderung durch die Schieber 68 und 80 in den Zugabegehäusen 58 und 60 eine bevorzugt hydraulisch oder elektrisch angetriebene Förderschnecke angeordnet sein, welche bei Bewegungen des Entnahmeschildes 16 intermittierend angetrieben wird und den Futterzusatz abgibt.

Weiterhin kann der Futterzusatz unter reinem Schwerkrafteinfluß beispielsweise aus den Vorratsbehältern 54 und 56 nach unten fließen, wobei dann an den unteren Öffnungen der Vorratsbehälter 54 und 56 elektromagnetisch oder bevorzugt hydraulisch betätigbare Sperrventile angeordnet sind, mit welchen der Futterzusatz selektiv abgebbar ist.

Eine weitere Möglichkeit ist, die Vorratsbehälter 54 und 56 nicht im Bereich des Entnahmeschildes 16 anzuordnen, sondern weiter entfernt hiervon, beispielsweise an einer oder den beiden Seitenwänden des Transportbehälters 6, und dann die Förderung des Futterzusatzes zu der Zugabevorrichtung 48 im Entnahmebereich 50 beispielsweise pneumatisch vorzunehmen.

Eine pneumatische Förderung oder aber auch eine Förderung über Förderschnecken etc. würde sich auch dann anbieten, wenn die Dosierung des Futterzusatzes nicht im Entnahmebereich, also z.B. am Entnahmeschild erfolgt, sondern an anderer Stelle und dann die fertig dosierten Futterzusatzmengen in den Entnahmebereich gefördert werden. Die Anordnung der Zugabevorrichtung entfernt vom Entnahmebereich hat beispielsweise dann Sinn, wenn hierdurch größere Vorratsbehälter vorgesehen werden können.

Eine andere Möglichkeit der Zudosierung ist, eine in Längsrichtung beispielsweise über 30° geschlitzte Welle vorzusehen, welche in einer Stellung zur Aufnahme des Futterzusatzes unter Schwerkrafteinfluß mit dem Längsschlitz nach oben weisend steht und z.B. hydraulisch um 180° drehbar ist, um den Schlitz nach unten zu drehen, so daß der Futterzusatz abgegeben wird.

Die erfindungsgemäße Zugabevorrichtung 48 zeichnet sich neben ihrer Fähigkeit, den Futterzusatz bereits im Zuge der Entnahmebewegung der Silage zuzugeben, so daß die Anbindung des Futterzusatzes an die Silage erheblich verbessert ist, noch u.a. dadurch aus, daß sie robusten Aufbau hat und in der Lage ist, Futterzusätze unterschiedlicher Beschaffenheit gleichermaßen gut zu dosieren, das heißt, Futterzusätze sowohl in Pulver- oder Granulat- als auch Pelletform. Durch die besonders bevorzugte Kopplung der Dosierbewegungen seitens der Zugabevorrichtung 48 mit den Bewegungen seitens des Entnahmeschildes 16 wird eine gleichmäßige Aufbringung des Futterzusatzes auf die gerade vom Entnahmeschild 16 gehandhabte Silage-Teilmenge gewährleistet, was wiederum eine innige Ein- oder Anbindung des Futterzusatzes in oder an die Silage sicherstellt, so daß die sich ergebende Futtermischung aus Silage und Futterzusatz von den Tieren nicht mehr selektiert werden kann.

## Patentansprüche

1. Silokamm zur Entnahme und Verteilung von Silage, mit:
einem Transportbehälter (6);
einer Ladeeinrichtung (8) mit einem schwenkbaren und kraftangetriebenen Entnahmeschild (16), mit welchem Silage in einem Entnahmebereich (50) aus dem Silo entnehmbar und in den Transportbehälter (6) einladbar ist; und
einer Vorrichtung (10) zum Abgeben und Verteilen der Silage aus dem Transportbehälter (6),
**gekennzeichnet durch**
eine Zugabevorrichtung (48) für wenigstens einen Futterzusatz, insbesondere Kraftfutter, im Entnahmebereich (50), wobei die Zugabevorrichtung (48) an dem Entnahmeschild (16) angeordnet ist.

2. Silokamm nach Anspruch 1, **dadurch gekennzeichnet, daß** die Zugabevorrichtung (48) an der dem Transportbehälter-Innenraum zugewandeten Seite (52) des Entnahmeschildes (16) angeordnet ist.

3. Silokamm nach Anspruch 1, **dadurch gekennzeichnet, daß** die Zugabevorrichtung (48) an der dem Transportbehälter-Innenraum abgewandeten Seite des Entnahmeschildes (16) angeordnet ist.

4. Silokamm nach einem der vorhergehenden Ansprüche, **dadurch gekennzeichnet, daß** die Zugabevorrichtung (48) den Futterzusatz in dosierbaren Mengen der Silage zugibt.

5. Silokamm nach einem der vorhergehenden Ansprüche, **gekennzeichnet durch** mindestens einen Vorratsbehälter (54, 56) für den Futterzusatz, welcher in Fluidverbindung mit der Zugabevorrichtung (48) ist.

6. Silokamm nach einem der vorhergehenden Ansprüche, **dadurch gekennzeichnet, daß** die Zugabevorrichtung (48) den Futterzusatz mechanisch fördert.

7. Silokamm nach Anspruch 6, **dadurch gekennzeichnet, daß** die Zugabevorrichtung (48) den Futterzusatz durch einen kolbenbetätigten Schieber (68, 80) fördert.

8. Silokamm nach Anspruch 7, **dadurch gekennzeichnet, daß** der Schieber (68, 80) einfachwirkend ist.

9. Silokamm nach Anspruch 7, **dadurch gekennzeichnet, daß** der Schieber (68, 80) doppeltwirkend ist.

10. Silokamm nach einem der Ansprüche 7 bis 9, **dadurch gekennzeichnet, daß** der Schieber (68, 80) hydraulisch betätigt ist.

11. Silokamm nach Anspruch 6, **dadurch gekennzeichnet, daß** die Zugabevorrichtung (48) den Futterzusatz durch eine Förderschnecke fördert.

12. Silokamm nach Anspruch 11, **dadurch gekennzeichnet, daß** die Förderschnecke durch einen Hydraulik- oder Elektromotor angetrieben ist.

13. Silokamm nach Anspruch 5 oder 6, **dadurch gekennzeichnet, daß** der Futterzusatz unter Schwerkrafteinfluß aus dem Vorratsbehälter (54, 56) fließt, wobei der Vorratsbehälter von einem Sperrventil selektiv öffen- und schließbar ist.

14. Silokamm nach Anspruch 13, **dadurch gekennzeichnet, daß** das Sperrventil elektromagnetisch oder hydraulisch betätigbar ist.

15. Silokamm nach Anspruch 5 oder 6, **dadurch gekennzeichnet, daß** der Futterzusatz pneumatisch aus dem Vorratsbehälter (54, 56) gefördert wird.

16. Silokamm nach einem der Ansprüche 4 bis 15, **dadurch gekennzeichnet, daß** bei einer hydraulischen Betätigung der Zugabevorrichtung (48) deren Hydraulikantrieb (74) mit demjenigen (32) für die Vor- und Rückwärtsbewegungen des Entnahmeschildes (16) gekoppelt ist.

17. Silokamm nach Anspruch 16, **dadurch gekennzeichnet, daß** die Zugabefunktion der Zugabevorrichtung (48) mit der Bewegung des Entnahmeschildes (16) derart gekoppelt ist, daß bei jeder zum Transportbehälter-Innenraum hin und von diesem weg gerichteten Bewegung des Entnahmeschildes (16) die Zugabevorrichtung (48) eine Futterzusatz-Dosis abgibt.

18. Silokamm nach einem der vorhergehenden Ansprüche, **dadurch gekennzeichnet, daß** die Zugabevorrichtung (48) den Futterzusatz über die Breite der Transportbehälter-Beladeöffnung (24) verteilt abgibt.

## Claims

1. Silo cutter for removing and distributing silage, having:
a transport container (6);
a loading device (8) having a pivotable and power-driven removal board (16) with which silage can be removed from the silo in a removal region (50) and loaded into the transport container (6); and
a device (10) for delivering and distributing the silage from the transport container (6),
**characterised by**
an adding device (48) for at least one feed additive, especially concentrated feed, in the removal region (50), the adding device (48) being arranged on the removal board (16).

2. Silo cutter according to claim 1, **characterised in that** the adding device (48) is arranged on that side (52) of the removal board (16) which faces the interior space of the transport container.

3. Silo cutter according to claim 1, **characterised in that** the adding device (48) is arranged on that side of the removal board (16) which faces away from the interior space of the transport container.

4. Silo cutter according to any one of the preceding claims, **characterised in that** the adding device (48) adds the feed additive to the silage in meterable amounts.

5. Silo cutter according to any one of the preceding claims, **characterised by** at least one storage container (54, 56) for the feed additive, which container is in fluid connection with the adding device (48).

6. Silo cutter according to any one of the preceding claims, **characterised in that** the adding device (48) conveys the feed additive mechanically.

7. Silo cutter according to claim 6, **characterised in that** the adding device (48) conveys the feed additive by means of a piston-operated slide (68, 80).

8. Silo cutter according to claim 7, **characterised in that** the slide (68, 80) is single-acting.

9. Silo cutter according to claim 7, **characterised in that** the slide (68, 80) is double-acting.

10. Silo cutter according to any one of claims 7 to 9, **characterised in that** the slide (68, 80) is hydraulically operated.

11. Silo cutter according to claim 6, **characterised in that** the adding device (48) conveys the feed additive by means of a conveyor worm.

12. Silo cutter according to claim 11, **characterised in that** the conveyor worm is driven by a hydraulic or electrical motor.

13. Silo cutter according to claim 5 or 6, **characterised in that** the feed additive flows out of the storage container (54, 56) under the effect of gravity, the storage container being selectively openable and closable by a shut-off valve.

14. Silo cutter according to claim 13, **characterised in that** the shut-off valve can be operated electromagnetically or hydraulically.

15. Silo cutter according to claim 5 or 6, **characterised in that** the feed additive is conveyed pneumatically out of the storage container (54, 56).

16. Silo cutter according to any one of claims 4 to 15, **characterised in that**, if the adding device (48) is operated hydraulically, its hydraulic drive (74) is coupled to that (32) used for the forwards and backwards movements of the removal board (16).

17. Silo cutter according to claim 16, **characterised in that** the adding function of the adding device (48) is coupled with the movement of the removal board (16) in such a manner that, at each movement of the removal board (16) directed towards and away from the interior space of the transport container, the adding device (48) delivers a dose of feed additive.

18. Silo cutter according to any one of the preceding claims, **characterised in that** the adding device (48) delivers the feed additive in a manner distributed over the width of the loading opening (24) of the transport container.

## Revendications

1. Outil à couper un ensilage, pour le prélèvement et la distribution d'ensilage, comportant :
un récipient de transport (6);
un dispositif de chargement (8) avec un bouclier de prélèvement (16), susceptible de pivoter et entraîné par ne force, bouclier à l'aide duquel de l'ensilage peut être prélevé du silo dans une zone de prélèvement (20) et être chargé dans le récipient de transport (6); et
un dispositif (10) pour délivrer et répartir l'ensilage venant du récipient de transport (6),
**caractérisé par**
un dispositif d'addition (48) pour au moins un additif d'alimentation animale, en particulier une alimentation animale fourragère, dans la zone de prélèvement (50), le dispositif d'addition (48) étant disposé sur le bouclier de prélèvement (16).

2. Outil à couper un ensilage selon la revendication 1, **caractérisé en ce que** le dispositif d'addition (48) est disposé sur la face (52), tournée vers l'espace intérieur de récipient de transport, du bouclier de prélèvement (16).

3. Outil à couper un ensilage selon la revendication 1, **caractérisé en ce que** le dispositif d'addition (48) est disposé sur la face, opposée à l'espace intérieur de récipient de transport, du bouclier de prélèvement (16).

4. Outil à couper un ensilage selon l'une des revendications précédentes, **caractérisé en ce que** le dispositif d'addition (48) ajoute l'additif d'alimentation animale à l'ensilage, par quantités dosables.

5. Outil à couper un ensilage selon l'une des revendications précédentes, **caractérisé par** au moins un récipient de stockage (54, 56) pour l'additif d'alimentation animale, mis en liaison fluidique avec le dispositif d'addition (48).

6. Outil à couper un ensilage selon l'une des revendications précédentes, **caractérisé en ce que** le dispositif d'addition (48) assure le transport mécanique de l'additif d'alimentation animale.

7. Outil à couper un ensilage selon la revendication 6, **caractérisé en ce que** le dispositif d'addition (48) transporte l'additif d'alimentation animale au moyen d'un poussoir (68, 80) actionné par un piston.

8. Outil à couper un ensilage selon la revendication 7, **caractérisé en ce que** le poussoir (68, 80) est à simple action.

9. Outil à couper un ensilage selon la revendication 7, **caractérisé en ce que** le poussoir (68, 80) est à double action.

10. Outil à couper un ensilage selon l'une des revendications 7 à 9, **caractérisé en ce que** le poussoir (68, 80) est à actionnement hydraulique.

11. Outil à couper un ensilage selon la revendication 6, **caractérisé en ce que** le dispositif d'addition (48) transporte l'additif d'alimentation animale en utilisant une vis de transport.

12. Outil à couper un ensilage selon la revendication 11, **caractérisé en ce que** la vis de transport est entraînée par un moteur hydraulique ou électrique.

13. Outil à couper un ensilage selon la revendication 5 ou 6, **caractérisé en ce que** l'additif d'alimentation animale s'écoule hors du récipient de stockage (54, 56) sous l'effet des forces de gravité, le récipient de stockage étant susceptible d'être ouvert et fermé sélectivement, au moyen d'une soupape d'isolation.

14. Outil à couper un ensilage selon la revendication 13, **caractérisé en ce que** la soupape d'isolation est actionnable de façon électromagnétique ou hydraulique.

15. Outil à couper un ensilage selon la revendication 5 ou 6, **caractérisé en ce que** l'additif d'alimentation animale est transporté hors du récipient de stockage (54, 56) de façon pneumatique.

16. Outil à couper un ensilage selon la revendication 4 à 15, **caractérisé en ce que**, dans le cas d'un actionnement hydraulique du dispositif d'addition (48), son entraînement hydraulique (74) est couplé à celui (32) prévu pour le déplacement en avant et en arrière du bouclier de prélèvement (16).

17. Outil à couper un ensilage selon la revendication 16, **caractérisé en ce que** la fonction d'addition du dispositif d'addition (48) est couplée au mouvement du bouclier de prélèvement (16), de manière que, à chaque déplacement, en rapprochement et en éloignement de l'espace intérieur du récipient de transport, du bouclier de prélèvement (16), le dispositif d'addition (48) délivre une dose d'additif à l'alimentation animale.

18. Outil à couper un ensilage selon l'une des revendications précédentes, **caractérisé en ce que** le dispositif d'addition (48) délivre de façon distribuée l'additif d'alimentation animale, sur la largeur de l'ouverture de chargement (24) du récipient de transport.
